# EUROPÄISCHE PATENTSCHRIFT

(11) **EP 4 432 521 B1**
(45) Veröffentlichungstag und Bekanntmachung des Hinweises auf die Patenterteilung: **06.05.2026**
(21) Anmeldenummer: 23162589.8
(22) Anmeldetag: 17.03.2023
(51) Int. Cl.: H02K 1/278, H02K 1/30, H02K 1/2733, H02K 5/167, H02K 7/08, H02K 7/116

(54) **ROTOR MIT NABE AUS KUNSTSTOFF**
ROTOR WITH HUB MADE OF PLASTIC
ROTOR AVEC MOYEU EN PLASTIQUE

(43) Veröffentlichungstag der Anmeldung: 18.09.2024
(73) Patentinhaber: Magna Auteca GmbH, 8160 Krottendorf bei Weiz (AT)
(72) Erfinder: FUCHS, Reinhard, 8212 Pischelsdorf (AT); SCHLAGER, Hubert, 8182 Puch bei Weiz (AT)
(74) Vertreter: Zangger, Bernd

(56) Entgegenhaltungen:
- EP-A1- 1 322 023
- DE-A1- 102013 105 964
- DE-A1- 102020 122 164

## Beschreibung

### Gebiet der Erfindung

Die vorliegende Erfindung betrifft einen Rotor für einen Elektromotor und einen Kleinaktuator für ein Kraftfahrzeug, wobei der Kleinaktuator einen elektrisch kommutierten Elektromotor umfasst, mit einem solchen Rotor.

### Stand der Technik

In einigen elektrisch kommutierten Kleinaktuatoren kommen Rotoren zum Einsatz die in einem Getriebe direkt integriert sind. Der Rotor dreht sich im Stator um eine stillstehende Achse und eine in die Rotornabe integrierte Verzahnung dient als angetriebenes Ritzel des Getriebes. Aus Kostengründen bietet es sich an, die Nabe aus Kunststoff, bevorzugt im Spritzguss, herzustellen. In diesem Fall ist es notwendig, Augenmerk auf die Lagerluft zwischen Rotorbohrung und Achse zu legen: ist die Lagerluft zu klein, so kommt es aufgrund der verhältnismäßig großen thermischen Ausdehnungskoeffizienten von Kunststoffen zu einem Aufschrumpfen bei tiefer Temperatur, bei zu großer Lagerluft wiederum kann es zu einem Aufschwingen des Rotors kommen, welches ein störendes Geräusch zur Folge hat. In manchen Fällen ist der Toleranzbereich für die zulässige Lagerluft so klein, dass dies nicht prozesssicher hergestellt werden kann.

Die DE 10 2013 105 964 A1 beschreibt einen Rotor mit einer zusätzlichen Lagerbuchse die in die Nabe eingepresst oder von der Nabe umspritzt wird. Durch Wahl des Herstellungsprozesses bzw. die Wahl des Materials der Buchse kann eine entsprechende Lagerluft eingehalten werden. Durch das zusätzliche Bauteil entstehen aber zusätzliche Herstellungsaufwände und Kosten.

Aus der DE 10 2020 122 164 A1 ist ein Antriebselement, insbesondere für einen Stellantrieb, bekannt, mit einem Grundkörper, mit einem Gleitlager zur drehbaren Lagerung des Grundkörpers auf einer feststehenden Achse, wobei das Gleitlager eine Lagerausnehmung zur zumindest teilweisen Aufnahme der feststehenden Achse aufweist, und mit einer Federeinheit, welche dazu vorgesehen ist, eine radial wirkende Federkraft auf die in der Lagerausnehmung der Gleitlagereinheit angeordnete Achse auszuüben, wobei die Federeinheit zumindest einen Federarm aufweist, welcher dazu vorgesehen ist, an einem Außenumfang der Achse anzuliegen und die Achse mit einer radial wirkenden Federkraft zu beaufschlagen.

### Zusammenfassung der Erfindung

Es ist eine Aufgabe der Erfindung, einen Rotor für einen Elektromotor anzugeben, der einerseits ein Aufschrumpfen bei tiefer Temperatur und andererseits ein Aufschwingen des Rotors und somit störende Geräusche vermeidet und dabei prozesssicher und kostengünstig hergestellt werden kann. Eine weitere Aufgabe der Erfindung ist es, einen Kleinaktuator anzugeben, mit einem Elektromotor mit einem derart vorteilhaften Rotor.

Die Lösung der Aufgabe erfolgt durch einen Rotor für einen Elektromotor mit den Merkmalen gemäß Anspruch 1.

Der Rotor umfasst eine Nabe aus Kunststoff, einen mit der Nabe drehfest verbundenen Magnetring und eine stillstehende Achse, wobei die Nabe eine Bohrung aufweist und die stillstehende Achse in der Bohrung angeordnet ist, so dass die Nabe um die stillstehende Achse drehen kann, wobei ein Abschnitt der Nabe als federnder Fortsatz ausgebildet ist, der eine radiale Kraft auf die in der Bohrung angeordnete Achse ausübt.

Erfindungsgemäß ist die Nabe eines Rotors selbst in einer Weise gestaltet, dass ein Teil der Nabe als federnder Fortsatz, also als federnder Finger gegen die stehende Achse drückt und somit die Bewegung zwischen Nabe und Achse behindert. Aufgrund der Elastizität des Nabenmaterials bzw. der geometrischen Gestaltung als Fortsatz bzw. Finger, kommt es jedoch zu keinem Aufschrumpfen des Rotors auf die Achse, da dieser ausweichen kann. Vorteilhaft an dieser Ausführung ist, dass die Rotorbohrung mit relativ großer Toleranzbreite prozesssicher hergestellt werden kann ohne zusätzlichen Herstellungsaufwand und Kosten.

Erfindungsgemäß ist ein Abschnitt der Nabe als Lagerschale für die Achse ausgebildet. Zusätzlich zu dem Fortsatz, der auf die Achse drückt, gibt es also noch einen Abschnitt der Nabe, in dem die Achse aufliegt.

Erfindungsgemäß überdeckt die Lagerschale axial zumindest abschnittsweise den Fortsatz, besonders bevorzugt überdeckt sie den Fortsatz vollständig. Die Lagerschale kann also teilweise oder vollständig den selben axialen Bauraum verwenden, in dem auch der Fortsatz ausgebildet ist. Dadurch wird eine verbesserte Lagerung für die Achse durch eine längere Lagerschale im selben Bauraum ermöglicht.

Erfindungsgemäß bildet die Lagerschale ein Kreissegment, das zwischen 180 Grad und 350 Grad eines Kreises abdeckt, bevorzugt zwischen 185 Grad und 270 Grad.

Weiterbildungen der Erfindung sind in den abhängigen Ansprüchen, der Beschreibung sowie den beigefügten Zeichnungen angegeben.

Vorzugsweise erstreckt sich der Fortsatz im Wesentlichen parallel zur Achse.

Bevorzugt ist genau ein Abschnitt der Nabe als federnder Fortsatz ausgebildet, so dass lediglich ein federnder Fortsatz eine radiale Kraft auf die in der Bohrung angeordnete Achse ausübt. Lediglich ein "Finger" drückt gewissermaßen auf die Achse.

Der Fortsatz weist bevorzugt eine radial innen liegende Erhebung, insbesondere eine konvexe Ausformung, auf, so dass die Erhebung an der Achse anliegt.

Bevorzugt ist der Fortsatz in einem axialen Endbereich der Nabe ausgebildet und weist der Fortsatz, somit der "Finger", zu einem axialen Ende der Nabe, das den axialen Endbereich abschließt.

Der Magnetring ist bevorzugt radial außerhalb des Fortsatzes angeordnet und überdeckt den Fortsatz axial zumindest abschnittsweise, bevorzugt vollständig.

Bevorzugt ist die Lagerschale etwa im gleichen radialen Abstand zum Mittelpunkt der Achse ausgebildet, wie der Fortsatz, so dass der Fortsatz und die Lagerschale Kreissegmente des selben Kreises bilden.

Dabei ist vorzugsweise der radiale Abstand des Fortsatzes vom Mittelpunkt der Bohrung der Nabe etwas kleiner, als der radial Abstand der Lagerschale vom Mittelpunkt der Bohrung, da der Fortsatz gegen die Achse vorgespannt ist und die Achse gegen die Lagerschale drückt.

Der Fortsatz ist bevorzugt in Umfangsrichtung von den seitlichen Rändern der Lagerschale durch Spalten oder Schlitze getrennt.

Vorzugsweise ist in einem axialen Abschnitt, nämlich einem Verzahnungsbereich der Nabe, eine Verzahnung an der Nabe ausgebildet, wobei sich der Verzahnungsbereich bevorzugt nicht mit dem axialen Bereich des Fortsatzes überschneidet.

Die Lösung der Aufgabe erfolgt auch durch einen Kleinaktuator für ein Kraftfahrzeug, wobei der Kleinaktuator einen elektrisch kommutierten Elektromotor umfasst, wobei der Elektromotor einen Rotor umfasst, wobei der Rotor so ausgebildet ist, wie zuvor beschrieben.

Dabei ist bevorzugt radial außerhalb um den Magnetring des Rotors, ein stillstehender Stator des Elektromotors angeordnet.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines erfindungsgemäßen Rotors, schräg von oben.
- Fig. 2: ist eine dreidimensionale Darstellung des erfindungsgemäßen Rotors gemäß Fig. 1, schräg von unten.
- Fig. 3: ist eine seitliche Schnittansicht des erfindungsgemäßen Rotors gemäß Fig. 1 durch den Fortsatz, gemäß dem Schnitt A-A in Fig. 4.
- Fig. 4: ist eine Darstellung des erfindungsgemäßen Rotors gemäß Fig. 1 von unten und zeigt die Lage des Schnittes A-A.
- Fig. 5: ist eine Detaildarstellung des Details X der Fig. 3.

### Detaillierte Beschreibung der Erfindung

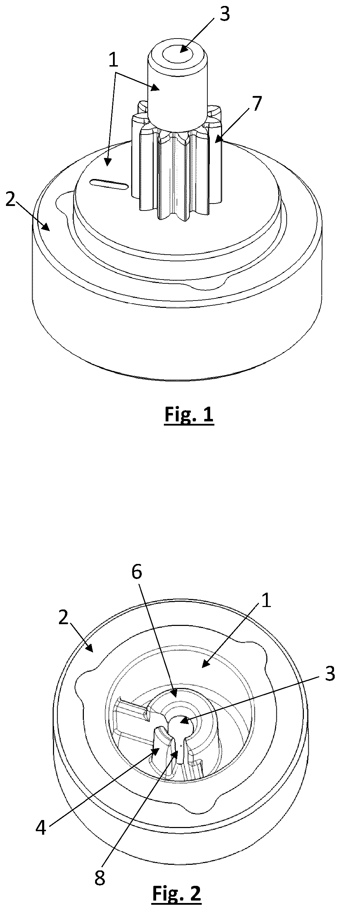

Fig. 1 zeigt einen Schrägriss eines erfindungsgemäßen Rotors von oben. Zu sehen ist die Nabe 1 aus Kunststoff mit integrierter Verzahnung 7 und der mit der Nabe 1 verbundenem Magnetring 2.

Fig. 2 zeigt einen Schrägriss des selben Rotors von unten. Die Nabe 1 ist, an der der Verzahnung 7 abgewandten Seite, durch Schlitze 8 geteilt. Dadurch bildet eine Seite einer kreisförmigen Ausformung der Nabe 1 um eine zentrale Bohrung 3 eine feste Lagerschale 6 und auf der gegenüberliegenden Seite der kreisförmigen Ausformung, in einem anderen Umfangsbereich, entsteht ein fingerförmiger Fortsatz 4 bzw. "Finger". Durch die geometrische Gestaltung des Fingers bzw. Fortsatzes 4 ist dieser im Vergleich zur Lagerschale 6 viel flexibler und kann unter Druckeinwirkung ausweichen.

Die Fig. 1 und 2 zeigen somit einen Rotor für einen Elektromotor, umfassend eine Nabe 1 aus Kunststoff, einen mit der Nabe 1 drehfest verbundenen Magnetring 2 und eine Bohrung 3, wobei im Elektromotor eine hier nicht dargestellte stillstehende Achse in der Bohrung 3 angeordnet ist, so dass die Nabe 1 um die stillstehende Achse drehen kann.

Erfindungsgemäß ist ein Abschnitt der Nabe 1 selbst, also einstückig von der Nabe 1, als federnder Fortsatz 4 ausgebildet, der eine radiale Kraft auf die in der Bohrung 3 angeordnete Achse ausübt.

Der Fortsatz 4 erstreckt sich im Wesentlichen parallel zur Achse und bildet eine Begrenzung der Bohrung 3.

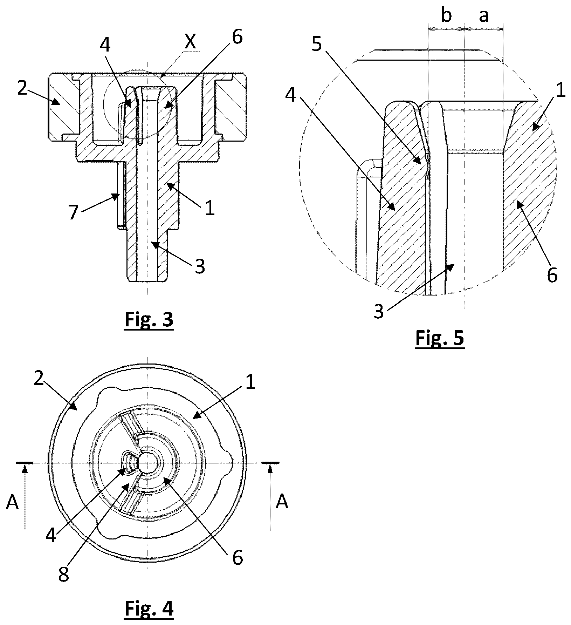

Wie auch in der Fig. 3 ersichtlich, ist der Fortsatz 4 in einem axialen Endbereich der Nabe 1 ausgebildet und weist in Richtung zu einem axialen Ende der Nabe 1, das diesen axialen Endbereich abschließt.

Der Magnetring 2 ist radial außerhalb des Fortsatzes 4 angeordnet und überdeckt den Fortsatz 4 axial vollständig.

Wie in Fig. 2 und Fig. 3 gut ersichtlich, ist ein Abschnitt der Nabe 1 als Lagerschale 6 für die Achse ausgebildet.

Die Lagerschale 6 ist in diesem axialen Endbereich axial gleich lang ausgebildet, wie der Fortsatz 4, und überdeckt daher den Fortsatz 4 vollständig.

Die Lagerschale 6 ist etwa im gleichen radialen Abstand zum Mittelpunkt der Achse ausgebildet, wie der Fortsatz 4, so dass der Fortsatz 4 und die Lagerschale 6 Kreissegmente des selben Kreises bilden, die durch Schlitze 8 voneinander getrennt sind.

Die Lagerschale 6 bildet ein Kreissegment, dass ungefähr 250 Grad einnimmt. Der Fortsatz 4 bildet ein Kreissegment. Dieses Kreissegment kann ungefähr 10 bis 40 Grad einnehmen, hier ungefähr 15 Grad.

In einem axialen Verzahnungsbereich der Nabe 1 ist eine Verzahnung 7 an der Nabe 1 ausgebildet, wobei sich der Verzahnungsbereich nicht mit dem axialen Bereich des Fortsatzes 4 überschneidet.

In der dargestellten Ausführung (siehe Fig. 3) weist die Nabe 1 eine becherförmige Ausformung auf, an der radial außen der Ringmagnet 2 angeordnet ist und in welcher radial innen die Lagerschale 6 und der Fortsatz 4 angeordnet sind. Der Boden dieses Bechers geht an dem anderen axialen Ende, an dem nicht der Fortsatz 4 ausgebildet ist, in eine Hülse über, die die Lagerschale 6 weiterführt und die die Bohrung 3 vollumfänglich begrenzt.

In der Detailansicht der Fig. 5 ist eine Erhebung 5 an der Innenseite des Fortsatzes 4 bzw. Fingers zu sehen, die den Bereich bildet, der mit der Achse in Berührung steht. Der Abstand "b" ist kleiner als der Abstand "a" ausgeführt, sodass wenn der Rotor auf die Achse geschoben wird, der Fortsatz 4 mit einer geringen Vorspannung auf die Achse drückt.

Der radiale Abstand des Fortsatzes 4 vom Mittelpunkt der Bohrung 3 der Nabe 1 ist daher etwas kleiner, als der radial Abstand der Lagerschale 6 vom Mittelpunkt der Bohrung 3, sodass der Fortsatz 4 gegen die Achse vorgespannt ist.

### Bezugszeichenliste

- 1: Nabe
- 2: Magnetring
- 3: Bohrung
- 4: Fortsatz
- 5: Erhebung
- 6: Lagerschale
- 7: Verzahnung
- 8: Schlitz

- a: Abstand
- b: Abstand

## Patentansprüche

1. Rotor für einen Elektromotor, umfassend eine Nabe (1) aus Kunststoff, einen mit der Nabe (1) drehfest verbundenen Magnetring (2) und eine stillstehende Achse, wobei die Nabe (1) eine Bohrung (3) aufweist und die stillstehende Achse in der Bohrung (3) angeordnet ist, so dass die Nabe (1) um die stillstehende Achse drehen kann, wobei ein Abschnitt der Nabe (1) als federnder Fortsatz (4) ausgebildet ist, der eine radiale Kraft auf die in der Bohrung (3) angeordnete Achse ausübt, wobei ein Abschnitt der Nabe (1) als Lagerschale (6) für die Achse ausgebildet ist, **dadurch gekenn**- **zeichnet**, dass die Lagerschale (6) axial zumindest abschnittsweise den Fortsatz (4) überdeckt, wobei die Lagerschale (6) ein Kreissegment bildet, dass zwischen 180 Grad und 350 Grad abdeckt.

2. Rotor nach Anspruch 1,
**dadurch gekennzeichnet , dass** sich der Fortsatz (4) im Wesentlichen parallel zur Achse erstreckt.

3. Rotor nach zumindest einem der vorhergehenden Ansprüche,
**dadurch gekennzeichnet , dass** genau ein Abschnitt der Nabe (1) als federnder Fortsatz (4) ausgebildet ist, so dass lediglich ein federnder Fortsatz (4) eine radiale Kraft auf die in der Bohrung (3) angeordnete Achse ausübt.

4. Rotor nach zumindest einem der vorhergehenden Ansprüche,
**dadurch gekennzeichnet , dass** der Fortsatz (4) eine radial innen liegende Erhebung (5) aufweist und die Erhebung (5) an der Achse anliegt.

5. Rotor nach zumindest einem der vorhergehenden Ansprüche,
**dadurch gekennzeichnet , dass** der Fortsatz (4) in einem axialen Endbereich der Nabe (1) ausgebildet ist und zu einem axialen Ende der Nabe (1) weist, das den axialen Endbereich abschließt.

6. Rotor nach zumindest einem der vorhergehenden Ansprüche,
**dadurch gekennzeichnet , dass** der Magnetring (2) radial außerhalb des Fortsatzes (4) angeordnet ist und den Fortsatz (4) axial zumindest abschnittsweise, bevorzugt axial vollständig, überdeckt.

7. Rotor nach zumindest einem der vorhergehenden Ansprüche,
**dadurch gekennzeichnet , dass** die Lagerschale (6) axial den Fortsatz (4) vollständig überdeckt.

8. Rotor nach zumindest einem der vorhergehenden Ansprüche,
**dadurch gekennzeichnet , dass** die Lagerschale (6) ein Kreissegment bildet, dass zwischen 185 Grad und 270 Grad abdeckt.

9. Rotor nach Anspruch 8,
**dadurch gekennzeichnet , dass** die Lagerschale (6) etwa im gleichen radialen Abstand zum Mittelpunkt der Achse ausgebildet ist, wie der Fortsatz (4), so dass der Fortsatz (4) und die Lagerschale (6) Kreissegmente des selben Kreises bilden.

10. Rotor nach Anspruch 9,
**dadurch gekennzeichnet , dass** der radiale Abstand des Fortsatzes (4) vom Mittelpunkt der Bohrung (3) der Nabe (1) etwas kleiner ist, als der radial Abstand der Lagerschale (6) vom Mittelpunkt der Bohrung (3), sodass der Fortsatz (4) gegen die Achse vorgespannt ist.

11. Rotor nach zumindest einem der vorhergehenden Ansprüche,
**dadurch gekennzeichnet , dass** in einem axialen Verzahnungsbereich der Nabe eine Verzahnung (7) an der Nabe (1) ausgebildet ist, wobei sich der Verzahnungsbereich bevorzugt nicht mit dem axialen Bereich des Fortsatzes (4) überschneidet.

12. Kleinaktuator für ein Kraftfahrzeug, wobei der Kleinaktuator einen elektrisch kommutierten Elektromotor umfasst, wobei der Elektromotor einen Rotor umfasst, wobei der Rotor nach zumindest einem der vorhergehenden Ansprüche ausgebildet ist.

13. Kleinaktuator nach Anspruch 12,
**dadurch gekennzeichnet , dass** radial außerhalb um den Magnetring (2) ein stillstehender Stator des Elektromotors angeordnet ist.

## Claims

1. Rotor for an electric motor comprising a hub (1) made of plastics material, a magnetic ring (2) which is connected to the hub (1) in a rotationally secure manner and a fixed axle, wherein the hub (1) has a bore (3) and the fixed axle is arranged in the bore (3) so that the hub (1) can rotate about the fixed axle, wherein a portion of the hub (1) is in the form of a resilient continuation (4) which applies a radial force to the axle which is arranged in the bore (3), wherein a portion of the hub (1) is in the form of a bearing shell (6) for the axle, **characterised in that** the bearing shell (6) at least partially axially covers the continuation (4), wherein the bearing shell (6) forms a circle segment which covers between 180 degrees and 350 degrees.

2. Rotor according to claim 1,
**characterised in that** the continuation (4) extends substantially parallel with the axle.

3. Rotor according to at least one of the preceding claims,
**characterised in that** precisely one portion of the hub (1) is in the form of a resilient continuation (4) so that only a resilient continuation (4) applies a radial force to the axle which is arranged in the bore (3).

4. Rotor according to at least one of the preceding claims,
**characterised in that** the continuation (4) has a radially internal projection (5) and the projection (5) bears on the axle.

5. Rotor according to at least one of the preceding claims,
**characterised in that** the continuation (4) is formed in an axial end region of the hub (1) and faces towards an axial end of the hub (1) which terminates the axial end region.

6. Rotor according to at least one of the preceding claims,
**characterised in that** the magnetic ring (2) is arranged radially outside the continuation (4) and axially covers the continuation (4) at least partially, preferably completely axially.

7. Rotor according to at least one of the preceding claims,
**characterised in that** the bearing shell (6) axially covers the continuation (4) completely.

8. Rotor according to at least one of the preceding claims,,
**characterised in that** the bearing shell (6) forms a circle segment which covers between185 degrees and 270 degrees.

9. Rotor according to claim 8,
**characterised in that** the bearing shell (6) is formed with substantially the same radial spacing with respect to the centre of the axle as the continuation (4) so that the continuation (4) and the bearing shell (6) form circle segments of the same circle.

10. Rotor according to claim 9,
**characterised in that** the radial spacing of the continuation (4) from the centre of the bore (3) of the hub (1) is slightly smaller than the radial spacing of the bearing shell (6) from the centre of the bore (3) so that the continuation (4) is pretensioned against the axle.

11. Rotor according to at least one of the preceding claims,
**characterised in that**, in an axial toothed region of the hub, a tooth arrangement (7) is formed on the hub (1), wherein the toothed region preferably does not intersect with the axial region of the continuation (4).

12. Small actuator for a motor vehicle, wherein the small actuator comprises an electrically commutated electric motor, wherein the electric motor comprises a rotor, wherein the rotor is constructed according to at least one of the preceding claims.

13. Small actuator according to claim 12,
**characterised in that** a fixed stator of the electric motor is arranged radially externally around the magnetic ring (2).

## Revendications

1. Rotor pour un moteur électrique, comportant un moyeu (1) en plastique, un anneau magnétique (2) relié de manière solidaire en rotation au moyeu (1) et un axe fixe, le moyeu (1) présentant un alésage (3) et l'axe fixe étant disposé dans l'alésage (3), de sorte que le moyeu (1) peut tourner autour de l'axe fixe, une partie du moyeu (1) étant réalisée sous forme de saillie élastique (4) qui exerce une force radiale sur l'axe disposé dans l'alésage (3), une partie du moyeu (1) étant réalisée sous forme de coussinet de palier (6) pour l'axe, **caractérisé en ce que** le coussinet de palier (6) recouvre axialement la saillie (4) au moins dans certaines parties, le coussinet de palier (6) formant un segment de cercle qui couvre entre 180 degrés et 350 degrés.

2. Rotor selon la revendication 1,
**caractérisé en ce que** la saillie (4) s'étend sensiblement parallèlement à l'axe.

3. Rotor selon au moins l'une des revendications précédentes,
**caractérisé en ce qu'**exactement une partie du moyeu (1) est réalisée sous forme de saillie élastique (4), de sorte que seulement une saillie élastique (4) exerce une force radiale sur l'axe disposé dans l'alésage (3).

4. Rotor selon au moins l'une des revendications précédentes,
**caractérisé en ce que** la saillie (4) présente une partie surélevée (5) située radialement à l'intérieur et la partie surélevée (5) s'appuie contre l'axe.

5. Rotor selon au moins l'une des revendications précédentes,
**caractérisé en ce que** la saillie (4) est réalisée dans une région d'extrémité axiale du moyeu (1) et est tournée vers une extrémité axiale du moyeu (1) qui termine la région d'extrémité axiale.

6. Rotor selon au moins l'une des revendications précédentes,
**caractérisé en ce que** l'anneau magnétique (2) est disposé radialement à l'extérieur de la saillie (4) et recouvre la saillie (4) axialement au moins dans certaines parties, de préférence complètement axialement.

7. Rotor selon au moins l'une des revendications précédentes,
**caractérisé en ce que** le coussinet de palier (6) recouvre complètement la saillie (4) axialement.

8. Rotor selon au moins l'une des revendications précédentes,
**caractérisé en ce que** le coussinet de palier (6) forme un segment de cercle qui couvre entre 185 degrés et 270 degrés.

9. Rotor selon la revendication 8,
**caractérisé en ce que** le coussinet de palier (6) est réalisé approximativement à la même distance radiale du centre de l'axe que la saillie (4), de sorte que la saillie (4) et le coussinet de palier (6) forment des segments de cercle du même cercle.

10. Rotor selon la revendication 9,
**caractérisé en ce que** la distance radiale de la saillie (4) au centre de l'alésage (3) du moyeu (1) est légèrement inférieure à la distance radiale du coussinet de palier (6) au centre de l'alésage (3), de sorte que la saillie (4) est précontrainte contre l'axe.

11. Rotor selon au moins l'une des revendications précédentes,
**caractérisé en ce qu'**une denture (7) est formée sur le moyeu (1) dans une région dentée axiale du moyeu, la région dentée ne croisant de préférence pas la région axiale de la saillie (4).

12. Petit actionneur pour un véhicule automobile, le petit actionneur comprenant un moteur électrique commuté électriquement, le moteur électrique comprenant un rotor, le rotor étant réalisé selon au moins l'une des revendications précédentes.

13. Petit actionneur selon la revendication 12,
**caractérisé en ce qu'**un stator fixe du moteur électrique est disposé radialement à l'extérieur autour de l'anneau magnétique (2).
